(19) 

**Europäisches Patentamt**

**European Patent Office**

**Office européen des brevets**

(11) **EP 3 431 308 B1**

(12) **EUROPEAN PATENT SPECIFICATION**

(45) Date of publication and mention
of the grant of the patent:
**13.05.2020 Bulletin 2020/20**

(51) Int Cl.:
***B60C 1/00*** *(2006.01)*     ***C08L 7/00*** *(2006.01)*
***C08L 15/00*** *(2006.01)*

(21) Application number: **18182369.1**

(22) Date of filing: **09.07.2018**

(54) **METHOD FOR PRODUCING RUBBER COMPOSITION FOR A HEAVY-DUTY TIRE TREAD**

VERFAHREN ZUR HERSTELLUNG EINER KAUTSCHUKZUSAMMENSETZUNG FÜR EINE HOCHBELASTBARE REIFENLAUFFLÄCHE

PROCÉDÉ DE PRODUCTION D'UNE COMPOSITION DE CAOUTCHOUC POUR UNE BANDE DE ROULEMENT DE PNEU POUR POIDS LOURDS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.07.2017 JP 2017140191**

(43) Date of publication of application:
**23.01.2019 Bulletin 2019/04**

(73) Proprietor: **Sumitomo Rubber Industries, Ltd.
Kobe-shi, Hyogo 651-0072 (JP)**

(72) Inventors:
• **NISHI, Noriyuki
Kobe-shi, Hyogo 651-0072 (JP)**
• **OTSUKI, Hirotoshi
Kobe-shi, Hyogo 651-0072 (JP)**

• **KASAI, Yuki
Kobe-shi, Hyogo 651-0072 (JP)**

(74) Representative: **TBK
Bavariaring 4-6
80336 München (DE)**

(56) References cited:
**EP-A1- 0 530 590**      **EP-A1- 1 057 860**
**US-A1- 2011 071 253**

• **DATABASE WPI Week 200429 Thomson Scientific, London, GB; AN 2004-307632 XP002786753, & JP 2003 286366 A (YOKOHAMA RUBBER CO LTD) 10 October 2003 (2003-10-10)**
• **DATABASE WPI Week 201446 Thomson Scientific, London, GB; AN 2014-M44906 XP002786754, & KR 2014 0076860 A (HANKOOK TIRE MFG CO LTD) 23 June 2014 (2014-06-23)**

EP 3 431 308 B1

**Description**

BACKGROUND OF THE INVENTION

Field of the Invention

The present invention relates to a method for producing a rubber composition for a heavy-duty tire tread and more specifically relates to a method for producing a rubber composition for a heavy-duty tire tread having excellent abrasion resistance.

Description of the Background Art

In recent years, in the transportation industry, tires having excellent low fuel consumption performance have been desired as tires for heavy-load vehicles such as trucks and buses for the reasons such as increase in expenses due to steep rise in fuel cost and increase in expenses due to introduction of environmental regulations. In addition, improvement of abrasion resistance has been desired for treads of truck tires and bus tires.

Natural rubbers have high mechanical strength and therefore excellent abrasion resistance, and thus have been widely used for treads of truck tires and bus tires. However, with a natural rubber, there is a problem that reversion due to over-vulcanization is likely to occur and low fuel consumption performance is likely to be decreased. In a rubber composition for such a heavy-duty tire tread, sulfur is generally used as a vulcanizing agent. In a rubber composition obtained by vulcanizing a natural rubber with sulfur, it is known that a crosslinked sulfur chain is cleaved due to thermal fatigue and the chain length is shortened due to re-crosslinking.

Therefore, there is a problem that, due to heat aging, the hardness of the rubber is increased or breaking strength, abrasion resistance, or the like is decreased, so that the performance of the tire is decreased. In vulcanization with sulfur, a phenomenon of reversion is likely to occur, so that there is a problem that safety of the rubber's physical properties is inferior. Hitherto, as methods for improving heat resistance by inhibiting reversion of a vulcanizable rubber composition which is used for rubber products such as tires, a method in which the blending amount of a vulcanization accelerator with respect to sulfur, which is a vulcanizing agent, is increased, a method in which a thiuram-based vulcanization accelerator is blended as a vulcanization accelerator, and use of a compound represented by -S-S-(CH$_2$)$_6$-S-S-, such as Vulcuren (registered trademark) KA9188 manufactured by LANXESS, together with sulfur as a vulcanizing agent (Japanese Laid-Open Patent Publication No. 2006-045471) have been described.

However, the invention disclosed in Japanese Laid-Open Patent Publication No. 2006-045471, reversion can be inhibited to some extent, but for a specific blending formula, there is room for improvement in abrasion resistance, and there is a problem that low fuel consumption performance is decreased in some cases.

Therefore, an object of the present invention is to provide a method for producing a rubber composition for a heavy-duty tire tread having further improved abrasion resistance.

SUMMARY OF THE INVENTION

As a result of a thorough study, the present inventors have found that a rubber composition for a heavy-duty tire tread having improved abrasion resistance can be obtained by using a specific organic crosslinking agent in a rubber composition containing a predetermined amount of a natural rubber, a predetermined amount of carbon black, and a predetermined amount of sulfur, kneading the organic crosslinking agent in a step of kneading a rubber component and the carbon black, and then kneading the sulfur and the vulcanization accelerator, and the present inventors have solved the above problem.

Specifically, the present invention is directed to

[1] a method for producing a rubber composition for a heavy-duty tire tread, the rubber composition containing a rubber component, carbon black, an organic crosslinking agent represented by formula (1) below, sulfur, and a vulcanization accelerator, wherein

an amount of a natural rubber in 100% by mass of the rubber component is not less than 75% by mass and preferably not less than 80% by mass,
an amount of the carbon black per 100 parts by mass of the rubber component is not less than 50 parts by mass, preferably 50 to 90 parts by mass, more preferably 50 to 70, further preferably 51 to 60 parts by mass, and particularly preferably 52 to 55 parts by mass,
an amount of the sulfur per 100 parts by mass of the rubber component is 0.1 to 0.7 parts by mass, preferably 0.2 to 0.7 parts by mass, more preferably 0.3 to 0.6 parts by mass, and further preferably 0.4 to 0.6 parts by mass, and
the method includes:

a first step of kneading the rubber component, the carbon black, and the organic crosslinking agent; and
a second step of kneading a kneaded product obtained in the first step, the sulfur, and the vulcanization accelerator,

$$R^1\text{-}(S)_n\text{-}A\text{-}(S)_m\text{-}R^2 \qquad (1)$$

wherein A represents an alkylene group having 2 to 10 carbon atoms and preferably 4 to 8 carbon atoms, $R^1$ and $R^2$ are the same or different from each other, and each represent a monovalent organic group containing a nitrogen atom, and n and m each independently represent an integer of 2 to 4,

[2] the method for producing the rubber composition for a heavy-duty tire tread according to the above [1], wherein, in the first step, the organic crosslinking agent is added after 0.5 to 3.0 minutes, preferably 1.0 to 2.0 minutes, and more preferably 1.0 to 1.5 minutes from start of kneading the rubber component and the carbon black,

[3] the method for producing the rubber composition for a heavy-duty tire tread according to the above [1] or [2], wherein the natural rubber contains a highly purified natural rubber having a phosphorus content of not greater than 500 ppm, preferably 200 ppm, and more preferably 100 ppm,

[4] the method for producing the rubber composition for a heavy-duty tire tread according to any one of the above [1] to [3], wherein an amount of the organic crosslinking agent per 100 parts by mass of the rubber component is 0.1 to 5.0 parts by mass, preferably 0.5 to 3.0 parts by mass, and more preferably 0.8 to 2.0 parts by mass,

[5] the method for producing the rubber composition for a heavy-duty tire tread according to any one of the above [1] to [4], wherein a discharge temperature in the first step is 100 to 180°C, preferably 110 to 170 °C, and more preferably 150 to 160°C, and

[6] the method for producing the rubber composition for a heavy-duty tire tread according to any one of the above [1] to [5], wherein a total kneading time in the first step is 1 to 6 minutes, preferably 2 to 5 minutes, and more preferably 3 to 4 minutes.

With the method for producing the rubber composition for a heavy-duty tire tread according to the present invention, the rubber composition containing a rubber component, carbon black, an organic crosslinking agent represented by the above formula (1), sulfur, and a vulcanization accelerator, wherein an amount of a natural rubber in 100% by mass of the rubber component is not less than 75% by mass, an amount of the carbon black per 100 parts by mass of the rubber component is not less than 50 parts by mass, an amount of the sulfur per 100 parts by mass of the rubber component is 0.1 to 0.7 parts by mass, and the method includes: a first step of kneading the rubber component, the carbon black, and the organic crosslinking agent; and a second step of kneading a kneaded product obtained in the first step, the sulfur, and the vulcanization accelerator, the abrasion resistance of the rubber composition for a heavy-duty tire tread can be improved.

## DESCRIPTION OF THE PREFERRED EMBODIMENTS

The present invention pertains to a method for producing a rubber composition for a heavy-duty tire tread, the rubber composition containing a rubber component, carbon black, an organic crosslinking agent represented by the above formula (1), sulfur, and a vulcanization accelerator, wherein an amount of a natural rubber in 100% by mass of the rubber component is not less than 75% by mass, an amount of the carbon black per 100 parts by mass of the rubber component is not less than 50 parts by mass, and an amount of the sulfur per 100 parts by mass of the rubber component is 0.1 to 0.7 parts by mass. This production method includes: a first step of kneading the rubber component, the carbon black, and the organic crosslinking agent; and a second step of kneading a kneaded product obtained in the first step, the sulfur, and the vulcanization accelerator. Accordingly, the abrasion resistance of the rubber composition for a heavy-duty tire tread is improved.

The reason why such an abrasion resistance improvement effect is achieved is not clear but is considered as follows. With the organic crosslinking agent represented by the above formula (1), C-C long chain bonds having stronger bonding force than an S-S single bond are formed between sulfide bonds, and thus resistance to mechanical fatigue is increased. In addition, the number of S-S bonds which are less tolerant of heat fatigue is decreased, and thus breakage can be prevented, and abrasion resistance can be improved. When such an organic crosslinking agent is added and kneaded together with another crosslinking agent and a vulcanization accelerator, a sufficient abrasion resistance improvement effect is less likely to be achieved. In the present invention, substituents bound to both ends are considered to cause an elimination reaction by kneading the organic crosslinking agent represented by the above formula (1) into the rubber component in the first step, whereby progress of later crosslinking can be promoted. Thus, even with a predetermined blending formula having a limited sulfur amount, abrasion resistance is considered to be able to be improved. In addition, it is considered that, by adding the organic crosslinking agent represented by the above formula (1) in base kneading after the rubber component and the carbon black are kneaded for a certain time period, the rubber component can be caused to react with the organic crosslinking agent represented by formula (1) in a state where the temperature of the rubber component has been sufficiently increased, and even with a blending formula having a limited sulfur amount, crosslinks are uniformly and sufficiently formed, and deterioration after the crosslinking can be inhibited. Furthermore, in the case of blending a highly-purified rubber from which phospholipids have been removed, a crosslinking reaction is considered to easily proceed due to the removal of phospholipids in addition to improvement of fatigue resistance due to the removal of phospholipids. Thus, abrasion resistance is considered to be synergistically improved.

Rubber Component

The rubber component used in the rubber composition for a heavy-duty tire tread according to the present invention contains 75% by mass or greater of a natural rubber in 100% by mass of the rubber component.

Natural Rubber

The natural rubber is not particularly limited, and natural rubbers that are generally used in the tire industry, such as SIR20, RSS#3, TSR20, and ENR, can be used. In addition, modified natural rubber that is highly purified and has a reduced phosphorus content is preferably used as the natural rubber. These natural rubbers can be used individually, or two or more of these natural rubbers can be used in combination.

Modified Natural Rubber

To highly purify means to remove impurities other than a natural polyisoprenoid component, such as phospholipids and protein. The natural rubber has a structure in which an isoprenoid component is coated with impurity components. Thus, by removing the impurities, the structure of the isoprenoid component is changed. When the structure of the isoprenoid component is changed as described above, the state of interaction with a blending ingredient is also changed. Thus, as a result, a reduction in energy loss and improvement of durability are achieved, and a better modified natural rubber is considered to be able to be obtained.

The method for highly purifying is not particularly limited, but specific examples thereof include (1) a method in which a natural rubber latex is subjected to saponification treatment, (2) a method in which a natural rubber latex is aggregated, then pulverized, and subjected to washing treatment, and (3) a method in which, after the above saponification treatment, washing treatment is performed and treatment with an acidic compound is performed. As a matter of course, the method for highly purifying the modified natural rubber is not particularly limited, and known methods including, for example, mechanical methods such as ultrasonic treatment and centrifugal separation, and methods for decomposing impurities such as protein by enzymes are used without limitations. Among them, from the standpoint of further removing impurities and improving low fuel consumption performance, the method in which, after the saponification treatment, washing treatment is performed and treatment with an acidic compound is performed, is preferable. From the standpoint of production efficiency, cost, dispersibility of a white filler, etc., washing treatment is preferable. Specifically, the natural rubber can be highly purified by the method described in International Publication No. WO2014/125700, or the like.

Examples of the natural rubber latex include a raw latex (field latex) collected by tapping Hevea trees, and a concentrated latex obtained by condensing the raw latex by a centrifugal separation method or a creaming method (a refined latex, a high ammonia latex obtained by adding ammonia by an ordinary method, and a LATZ latex stabilized with zinc oxide, TMTD (tetramethylthiuram disulfide), and ammonia). Among them, for the reason that high purification by pH control is easy, a field latex is preferably used.

From the standpoint of agitation efficiency or the like, a rubber component (solid rubber component) in the natural rubber latex is preferably 5 to 40% by mass and more preferably 10 to 30% by mass.

Examples of the method for the saponification treatment include methods disclosed in Japanese Laid-Open Patent Publication No. 2010-138359 and Japanese Laid-Open

Patent Publication No. 2010-174169. Specifically, the saponification treatment can be carried out by adding an alkali, and a surfactant as necessary, to the natural rubber latex and allowing the natural rubber latex to stand at a predetermined temperature for a certain time. In addition, agitation or the like may be performed as necessary. According to the above-described production method, phosphorus compounds released as a result of the saponification are removed, and thus the phosphorus content of the natural rubber can be reduced. Furthermore, the proteins in the natural rubber are decomposed by the saponification treatment, and thus the nitrogen content of the natural rubber can be reduced. By using a natural rubber latex, the saponification treatment can be efficiently carried out.

Examples of the alkali used for the saponification treatment include sodium hydroxide, potassium hydroxide, calcium hydroxide, and amine compounds. From the standpoint of the effects of the saponification treatment or influence of the saponification treatment on the stability of the natural rubber latex, sodium hydroxide or potassium hydroxide is particularly preferably used.

The added amount of the alkali is not particularly limited, but regarding the lower limit thereof, the added amount of the alkali per 100 parts by mass of the solid contents of the natural rubber latex is preferably not less than 0.1 parts by mass and more preferably not less than 0.3 parts by mass. Regarding the upper limit of the added amount, the added amount is preferably not greater than 10 parts by mass and more preferably not greater than 5.0 parts by mass. By setting the added amount of the alkali to be not less than 0.1 parts by mass, the saponification treatment tends to be able to be smoothly carried out. In addition, on the other hand, by setting the added amount of the alkali to be not greater than 10 parts by mass, the natural rubber latex tends to be able to be prevented from becoming unstable.

As the surfactant, at least one of an anionic surfactant, a nonionic surfactant, and an amphoteric surfactant can be used. Among them, examples of the anionic surfactant include carboxylic acid-based surfactants, sulfonic acid-based surfactants, sulfuric ester-based surfactants, and phosphoric ester-based surfactants. Examples of the nonionic surfactant include nonionic surfactants such as polyoxyalkylene ester-based surfactants, polyhydric alcohol fatty acid ester-based surfactants, glycolipid ester-based surfactants, and alkyl polyglycoside-based surfactants. Examples of the amphoteric surfactant include amphoteric surfactants such as amino acid type surfactants, betaine type surfactants, and amine oxide type surfactants. Among them, anionic surfactants are preferable, and sulfonic acid-based anionic surfactants are more preferable.

The added amount of the surfactant is not particularly limited, but regarding the lower limit thereof, the added amount of the surfactant per 100 parts by mass of the solid contents of the natural rubber latex is preferably not less than 0.01 parts by mass and more preferably not less than 0.10 parts by mass. Regarding the upper limit of the added amount, the added amount is preferably not greater than 5.00 parts by mass and more preferably not greater than 3.00 parts by mass. By setting the added amount of the surfactant to be not less than 0.01 parts by mass, the natural rubber latex tends to be able to be prevented from becoming unstable during the saponification treatment. In addition, on the other hand, by setting the added amount of the surfactant to be not greater than 5.00 parts by mass, the natural rubber latex tends to be able to be prevented from becoming excessively stable to make solidification difficult.

The temperature for the saponification treatment can be set as appropriate in a range where a saponification reaction with the alkali can proceed at a sufficient reaction rate, and in a range where the natural rubber latex does not cause alternation such as solidification. Normally, the temperature for the saponification treatment is preferably 30 to 80°C. In addition, in the case where the treatment is carried out while the natural rubber latex is allowed to stand, the time period for the treatment is preferably 3 to 24 hours, in consideration of sufficiently carrying out the treatment and improving the productivity, although this is dependent on the temperature for the treatment.

The washing treatment can be carried out by aggregating the natural rubber latex and then pulverizing and washing the aggregated rubber. An example of the method for the aggregation is a method in which an acid such as formic acid is added to adjust the pH, and a polymer flocculant is further added as necessary. In addition, examples of the polymer flocculant include cationic polymer flocculants such as a polymer of the quaternary methyl chloride salt of dimethylaminoethyl (meth)acrylate (for example, a polymethacrylic acid ester-based flocculant manufactured by MT AquaPolymer, Inc., etc.), anionic polymer flocculants such as a polymer of an acrylic acid salt, nonionic polymer flocculants such as an acrylamide polymer, and amphoteric polymer flocculants such as a copolymer of the quaternary methyl chloride salt of dimethylaminoethyl (meth)acrylate and an acrylic acid salt. In addition, the added amount of the polymer flocculant can be selected as appropriate. Furthermore, an example of the washing treatment is a method in which the rubber component is diluted and washed with water, centrifugal separation is performed, and the rubber component is taken out. In performing centrifugal separation, first, the natural rubber latex is diluted with water such that the rubber component thereof is 5 to 40% by mass and preferably 10 to 30% by mass. Next, centrifugal separation is preferably performed at 5000 to 10000 rpm for 1 to 60 minutes, and the washing is preferably repeated until a desired phosphorus content is achieved. By performing drying after the end of the washing treatment, the modified natural rubber in the present invention is obtained.

As a matter of course, the phosphorus content can be further reduced by carrying out the above-described washing treatment after the above-described saponification treatment.

The phosphorus content of the modified natural rubber is preferably not greater than 500 ppm, more preferably not greater than 200 ppm, and further preferably not greater than 100 ppm. The phosphorus is considered to be derived from the phospholipid contained in the natural rubber. By setting the phosphorus content of the modified natural rubber to be not greater than 500 ppm, the Mooney viscosity tends to be able to be prevented from increasing during storage to deteriorate processability, and also an increase in tan$\delta$ is prevented and favorable low fuel consumption performance tends to be able to be achieved. The phosphorus content can be measured by a conventional method such as ICP emission spectrometry.

The nitrogen content of the modified natural rubber is preferably not greater than 0.50% by mass and more preferably not greater than 0.40% by mass. The nitrogen content can be measured by a conventional method such as the Kjeldahl method and a method with a trace nitrogen meter. In the modified natural rubber, a natural antioxidant component, which is known to be originally contained in natural rubbers, is removed. Thus, the modified natural rubber may deteriorate due to long-term storage. Therefore, an artificial antioxidant may be added, and in such a case, a value measured after the modified natural rubber is immersed in acetone at room temperature (25°C) for 48 hours and the artificial antioxidant in the rubber is removed through acetone extraction, is used as the nitrogen content of the modified natural rubber.

The gel content of the modified natural rubber is preferably not greater than 30% by mass and more preferably not greater than 25% by mass. By setting the gel content to be not greater than 30% by mass, the rubber's physical properties such as low fuel consumption performance tend to improve. The gel content means a value measured as matter insoluble in toluene, which is a nonpolar solvent, and is hereinafter sometimes referred to merely as "gel content" or "gel fraction". The method for measuring the gel content is as follows. First, a natural rubber sample is immersed in dehydrated toluene, and the toluene solution is shaded and left in a dark place for 1 week. Thereafter, the toluene solution is centrifuged at $1.3 \times 10^5$ rpm for 30 minutes, thereby separating an insoluble gel component and toluene soluble components from each other. Methanol is added to the insoluble gel component to solidify the insoluble gel component, then drying is performed, and a gel content is obtained on the basis of the ratio of the mass of the gel component and the original mass of the sample.

The amount of the natural rubber in 100% by mass of the rubber component in the rubber composition for a heavy-duty tire tread according to the present invention is not less than 75% by mass and preferably not less than 80% by mass. When the amount of the natural rubber is less than 75% by mass, a decrease in fracture energy is caused, and thus the advantageous effects of the present invention cannot be achieved. In addition, the amount of the natural rubber in 100% by mass of the rubber component is preferably less than 100% by mass and more preferably not greater than 95% by mass. By setting the amount of the natural rubber to be less than 100% by mass, abrasion resistance tends to improve.

Carbon Black

The rubber composition for a heavy-duty tire tread according to the present invention contains carbon black from the standpoint of abrasion resistance, and fine particulate carbon black having a nitrogen adsorption specific surface area ($N_2SA$) of not less than 120 m$^2$/g is preferable.

From the standpoint of reinforcement, the nitrogen adsorption specific surface area ($N_2SA$) of the fine particulate carbon black is not less than 120 m$^2$/g, preferably not less than 140 m$^2$/g, and more preferably not less than 160 m$^2$/g. In addition, the upper limit of the $N_2SA$ of the fine particulate carbon black is not particularly limited, but, from the standpoint of low fuel consumption performance, the $N_2SA$ of the fine particulate carbon black is preferably not greater than 300 m$^2$/g and more preferably not greater than 200 m$^2$/g. The $N_2SA$ of the carbon black in the present specification is a value measured according to the A method of JIS K 6217.

The dibutyl phthalate (DBP) absorption amount of the fine particulate carbon black is preferably not less than 90 cm$^3$/100 g, more preferably not less than 100 cm$^3$/100 g, and further preferably not less than 110 cm$^3$/100 g. The upper limit of the DBP absorption amount of the fine particulate carbon black is not particularly limited, but the DBP absorption amount of the fine particulate carbon black is preferably not greater than 300 cm$^3$/100 g and more preferably not greater than 200 cm$^3$/100 g. When the DBP absorption amount of the fine particulate carbon black is within the above range, performance balance between low fuel consumption performance and abrasion resistance tends to be significantly improved. The DBP absorption amount of the carbon black in the present specification is a value measured according to JIS K 6217-4: 2001.

The ratio (CTAB/IA) of the cetyltrimethylammonium bromide adsorption specific surface area (CTAB) and the iodine adsorption amount (IA) of the fine particulate carbon black is preferably not less than 0.70, more preferably not less than 0.80, and further preferably not less than 0.85. The upper limit of the CTAB/IA of the fine particulate carbon black is not particularly limited, but the CTAB/IA of the fine particulate carbon black is preferably not greater than 1.00 and more preferably not greater than 0.95. When the CTAB/IA of the fine particulate carbon black is within the above range, performance balance between low fuel consumption performance and abrasion resistance tends to be significantly improved. The CTAB and the IA of the carbon black can be measured according to JIS K 6217-3:2001 and JIS K 6217-1:2001, respectively.

The average primary particle diameter of the fine particulate carbon black is not greater than 30 nm, preferably not greater than 25 nm, and more preferably not greater than 20 nm. In addition, from the standpoint of processability, the average primary particle diameter of the fine particulate carbon black is preferably not less than 1 nm, more preferably not less than 5 nm, and further preferably not less than 10 nm. When the average primary particle diameter of the fine particulate carbon black is within the above range, achievement of both desired processability and desired abrasion resistance tends to be easy. In the present specification, the average primary particle diameter of the carbon black is obtained as an average of measured diameters of 400 or more primary particles observed within a visual field during observation with a transmission electron microscope.

The amount of the fine particulate carbon black per 100 parts by mass of the rubber component is preferably not less than 5 parts by mass, more preferably not less than 10 parts by mass, and further preferably not less than 20 parts by mass. In addition, the amount of the fine particulate carbon black per 100 parts by mass of the rubber component is preferably not greater than 100 parts by mass and more preferably not greater than 70 parts by mass. When the amount of the fine particulate carbon black is within the above range, performance balance between low fuel consumption performance and abrasion resistance tends to be significantly improved.

The rubber composition for a heavy-duty tire tread according to the present invention preferably contains other carbon black in addition to the fine particulate carbon black. Such other carbon black is not particularly limited, but carbon black having a $N_2SA$ of 50 to 120 $m^2/g$ is preferable, and carbon black having a $N_2SA$ of 70 to 120 $m^2/g$ is more preferable. By using carbon black having such a $N_2SA$ together with the fine particulate carbon black, the advantageous effects of the present invention tend to be sufficiently exerted.

The total amount of the fine particulate carbon black and the other carbon black (total carbon black amount) per 100 parts by mass of the rubber component is not less than 50 parts by mass, preferably not less than 51 parts by mass, and more preferably not less than 52 parts by mass. When the total carbon black amount is less than 50 parts by mass, abrasion resistance tends to be decreased. In addition, the total carbon black amount per 100 parts by mass of the rubber component is preferably not greater than 90 parts by mass, more preferably not greater than 70 parts by mass, further preferably not greater than 60 parts by mass, and particularly preferably not greater than 55 parts by mass. By setting the total carbon black amount to be not greater than 90 parts by mass, deterioration of processability tends to be able to be prevented.

Organic Crosslinking Agent

From the standpoint of being resistant to mechanical fatigue or heat fatigue and being able to improve abrasion resistance and from the standpoint of maintaining breaking physical properties after aging, the rubber composition for a heavy-duty tire tread according to the present invention contains an organic crosslinking agent represented by formula (1).

$$R^1\text{-}(S)_n\text{-}A\text{-}(S)_m\text{-}R^2 \qquad (1)$$

(wherein A represents an alkylene group having 2 to 10 carbon atoms, $R^1$ and $R^2$ are the same or different from each other, and each represent a monovalent organic group containing a nitrogen atom, and n and m each independently represent an integer of 2 to 4.)

The alkylene group having 2 to 10 carbon atoms, which is A, is not particularly limited, and examples thereof include linear alkylene groups, branched linear alkylene groups, and cyclic alkylene groups. Among them, linear alkylene groups are preferable. The number of carbon atoms is preferably 4 to 8 and more preferably 6. When the number of carbon atoms of the alkylene group is 1, the thermal stability is poor, and an effect due to the presence of the alkylene group tends to not be achieved. When the number of carbon atoms of the alkylene group is not less than 11, formation of a crosslinked chain represented by $-(S)_n\text{-}A\text{-}(S)_m\text{-}$ tends to be difficult.

Examples of the alkylene group that satisfies the above conditions include an ethylene group, a trimethylene group, a tetramethylene group, a pentamethylene group, a hexamethylene group, a heptamethylene group, an octamethylene group, and a decamethylene group. Among them, a hexamethylene group is preferable for the reason that a crosslinked chain represented by $-(S)_n\text{-}A\text{-}(S)_m\text{-}$ is smoothly formed between polymers to achieve thermal stability.

$R^1$ and $R^2$ are not particularly limited as long as $R^1$ and $R^2$ are each a monovalent organic group containing a nitrogen atom, but a monovalent organic group containing at least one aromatic ring is preferable, and a monovalent organic group containing a binding group represented by N-C(=S)- in which a carbon atom is bound to a $-(S)_n\text{-}$ or $-(S)_m\text{-}$ group is more preferable. $R^1$ and $R^2$ may be the same or different from each other, but are preferably the same for the reasons such as ease of production.

$R^1$ and $R^2$ each contain at least one aromatic ring and more preferably contain a binding group represented by N-C(=S)- in which a carbon atom is bound to a $-(S)_n\text{-}$ or $-(S)_m\text{-}$group. In this case as well, $R^1$ and $R^2$ may be the same or different from each other, but are preferably the same for the reasons such as ease of production.

n and m are not particularly limited as long as n and m are each independently an integer of 2 to 4. However, for the reasons such as inhibition of thermal deterioration, n and m are each preferably 2.

As a preferable mode of the organic crosslinking agent represented by the above formula (1), for example, A represents an alkylene group having 4 to 8 carbon atoms, and $R^1$ and $R^2$ each contain at least one aromatic ring and contain a binding group represented by N-C(=S)-in which a carbon atom is bound to a -$(S)_n$- or -$(S)_m$- group.

As another preferable mode of the organic crosslinking agent represented by the above formula (1), for example, A represents an alkylene group having 4 to 8 carbon atoms, $R^1$ and $R^2$ each contain at least one aromatic ring and contain a binding group represented by N-C(=S)- in which a carbon atom is bound to a -$(S)_n$- or -$(S)_m$- group, and n and m are each 2.

Examples of the organic crosslinking agent represented by the above formula (1) include 1,2-bis(N,N'-dibenzylthiocarbamoyldithio)ethane, 1,3-bis(N,N'-dibenzylthiocarbamoyldithio)propane, 1,4-bis(N,N'-dibenzylthiocarbamoyldithio)butane, 1,5-bis(N,N'-dibenzylthiocarbamoyldithio)pentane, 1,6-bis(N,N'-dibenzylthiocarbamoyldithio)hexane, 1,7-bis(N,N'-dibenzylthiocarbamoyldithio)heptane, 1,8-bis(N,N'-dibenzylthiocarbamoyldithio)octane, 1,9-bis(N,N'-dibenzylthiocarbamoyldithio)nonane, and 1,10-bis(N,N'-dibenzylthiocarbamoyldithio)decane. Among them, 1,6-bis(N,N'-dibenzylthiocarbamoyldithio)hexane is preferable for the reasons that it is thermally stable and has good polarizability.

The amount of the organic crosslinking agent represented by the above formula (1) per 100 parts by mass of the rubber component is preferably not less than 0.1 parts by mass, more preferably not less than 0.5 parts by mass, and further preferably not less than 0.8 parts by mass. By setting the amount of the organic crosslinking agent represented by the above formula (1) to be not less than 0.1 parts by mass, low fuel consumption performance, rubber strength, and abrasion resistance tend to further improve. The amount of the organic crosslinking agent represented by the above formula (1) per 100 parts by mass of the rubber component is preferably not greater than 5.0 parts by mass, more preferably not greater than 3.0 parts by mass, and further preferably not greater than 2.0 parts by mass. By setting the amount of the organic crosslinking agent represented by the above formula (1) to be not greater than 5.0 parts by mass, low fuel consumption performance tends to be easily maintained.

Sulfur

The rubber composition for a heavy-duty tire tread according to the present invention contains 0.1 to 0.7 parts by mass of sulfur as a vulcanizing agent per 100 parts by mass of the rubber component.

The type of sulfur is not particularly limited, and sulfur that is generally used in the rubber industry can be used. Examples of the sulfur include powdery sulfur, precipitated sulfur, colloidal sulfur, surface-treated sulfur, and insoluble sulfur.

The amount of the sulfur per 100 parts by mass of the rubber component is not less than 0.1 parts by mass, preferably not less than 0.2 parts by mass, and more preferably not less than 0.3 parts by mass. When the amount of the sulfur is less than 0.1 parts by mass, low fuel consumption performance tends to deteriorate. The amount of the sulfur per 100 parts by mass of the rubber component is not greater than 0.7 parts by mass, preferably not greater than 0.6 parts by mass, and more preferably not greater than 0.5 parts by mass. When the amount of the sulfur exceeds 0.7 parts by mass, fracture energy after aging tends to decrease.

Vulcanization Accelerator

The rubber composition for a heavy-duty tire tread according to the present invention contains a vulcanization accelerator. The vulcanization accelerator is not particularly limited, but examples thereof include sulfenamide-based vulcanization accelerators, thiazole-based vulcanization accelerators, thiuram-based vulcanization accelerators, thiourea-based vulcanization accelerators, guanidine-based vulcanization accelerators, dithiocarbamic acid-based vulcanization accelerators, aldehyde-amine-based or aldehyde-ammonia-based vulcanization accelerators, imidazoline-based vulcanization accelerators, and xanthate-based vulcanization accelerators. Among them, sulfenamide-based vulcanization accelerators are preferable since the advantageous effects of the present invention are more suitably achieved.

Examples of sulfenamide-based vulcanization accelerators include CBS (N-cyclohexyl-2-benzothiazyl sulfenamide), TBBS (N-tert-butyl-2-benzothiazyl sulfenamide), N-oxyethylene-2-benzothiazyl sulfenamide, N,N'-diisopropyl-2-benzothiazyl sulfenamide, and N,N-dicyclohexyl-2-benzothiazyl sulfenamide. Examples of thiazole-based vulcanization accelerators include 2-mercaptobenzothiazole and dibenzothiazolyl disulfide. Examples of thiuram-based vulcanization accelerators include tetramethylthiuram monosulfide, tetramethylthiuram disulfide, and tetrabenzylthiuram disulfide (TBzTD). Examples of guanidine-based vulcanization accelerators include diphenylguanidine (DPG), diorthotolylguanidine, and orthotolylbiguanidine. These vulcanization accelerators may be used individually, or two or more of these vulcanization accelerators may be used in combination. Among them, TBBS is preferable since the advantageous effects of the present invention are more suitably achieved.

The amount of the vulcanization accelerator per 100 parts by mass of the rubber component is preferably not less than 0.1 parts by mass, more preferably not less than 0.5 parts by mass, and further preferably not less than 0.9 parts by mass. By setting the amount of the vulcanization accelerator to be not less than 0.1 parts by mass, low fuel consumption performance tends to further improve. The amount of the vulcanization accelerator per 100 parts by mass of the rubber component is preferably not greater than 4.0 parts by mass, more preferably not greater than 3.0 parts by mass, and further preferably not greater than 2.0 parts by mass. By setting the amount of the vulcanization accelerator to be not greater than 4.0 parts by mass, abrasion resistance tends to be easily maintained.

Other Ingredients

In addition to the above components, the rubber composition for a heavy-duty tire tread according to the present invention contains, as necessary, a rubber component other than the natural rubber, ingredients that are conventionally and generally used in the rubber industry, for example, a reinforcing filler other than carbon black, a silane coupling agent, a softener such as oil, adhesive resin, and liquid rubber, various antioxidants, wax, zinc oxide, stearic acid, and the like.

Other Rubber Components

Examples of other usable rubber components other than the natural rubber include, but not particularly limited to, diene-based rubber components such as synthetic isoprene rubber (IR), butadiene rubber (BR), styrene-butadiene rubber (SBR), styrene-isoprene-butadiene rubber (SIBR), chloroprene rubber (CR), and acrylonitrile-butadiene rubber (NBR), and butyl-based rubbers such as chlorinated isobutylene-isoprene-rubber. Hydrogenated products or modified products of these rubbers may be used. Among them, BR is preferably used as another rubber component from the standpoint of abrasion resistance.

The BR is not particularly limited, and, for example, BRs that are generally used in the tire industry, such as BR having a cis-1,4 bond content of less than 50% (low-cis BR), BR having a cis-1,4 bond content of not less than 90% (high-cis BR), rare-earth element-based butadiene rubber synthesized using a rare-earth element-based catalyst (rare-earth element-based BR), BR containing syndiotactic polybutadiene crystal (SPB-containing BR), and modified BR (high-cis modified BR, low-cis modified BR), can be used. Among them, at least one type selected from the group consisting of high-cis BR, low-cis BR, and low-cis modified BR is preferably used, and high-cis BR is more preferably used.

Examples of high-cis BR include high-cis BRs manufactured by and available from JSR Corporation, Zeon Corporation, Ube Industries, Ltd., etc. Among the high-cis BRs, high-cis BR having a cis-1,4 bond content of not less than 95% is further preferable. These high-cis BRs may be used individually, or two or more of these high-cis BRs may be used in combination. By containing high-cis BR, low-temperature characteristics and abrasion resistance can be improved. Examples of low-cis BR include BR 1250 manufactured by and available from Zeon Corporation. These low-cis BRs may be used individually, or two or more of these low-cis BRs may be used in combination. The cis-1,4 bond content of the BR is a value calculated by infrared absorption spectrometry.

In the case where the rubber composition for a heavy-duty tire tread according to the present invention contains BR, the amount of the BR in 100% by mass of the rubber component is preferably not less than 5% by mass, more preferably not less than 7% by mass, and further preferably not less than 9% by mass. By setting the amount of the BR to be not less than 5% by mass, abrasion resistance tends to improve. In addition, the amount of the BR in 100% by mass of the rubber component is preferably not greater than 35% by mass, more preferably not greater than 30% by mass, and further preferably not greater than 25% by mass. By setting the amount of the BR to be not greater than 35% by mass, processability tends to be easily maintained.

The total amount of the natural rubber and the BR in 100% by mass of the rubber component is preferably not less than 80% by mass, more preferably not less than 90% by mass, and further preferably 100% by mass.

Other Reinforcing Fillers

As a reinforcing filler other than carbon black, a reinforcing filler that is conventionally used in tire rubber compositions, such as silica, calcium carbonate, alumina, clay, and talc, can be contained.

Silica

In the case where silica is contained, the type of silica is not particularly limited, and, for example, silica that is generally used in the tire industry, such as silica prepared by a dry process (anhydrous silica) and silica prepared by a wet process (hydrous silica), can be used. Among them, hydrous silica prepared by a wet process is preferable for the reason that it has a higher silanol group content. These types of silica may be used individually, or two or more of these types of silica may be used in combination.

9

From the standpoint of reinforcement after vulcanization, the nitrogen adsorption specific surface area ($N_2SA$) of the silica is preferably not less than 40 $m^2$/g, more preferably not less than 50 $m^2$/g, and further preferably not less than 80 $m^2$/g. In addition, from the standpoint of low heat generation property and processability of the rubber, the $N_2SA$ of the silica is preferably not greater than 500 $m^2$/g, more preferably not greater than 300 $m^2$/g, and further preferably not greater than 200 $m^2$/g. The $N_2SA$ of the silica in the present specification is a value measured by the BET method according to ASTM D 3037-81.

In the case where silica is contained, the amount of the silica per 100 parts by mass of the rubber component is preferably not less than 1 part by mass, more preferably not less than 3 parts by mass, and further preferably not less than 4 parts by mass. In addition, the amount of the silica per 100 parts by mass of the rubber component is preferably not greater than 150 parts by mass and more preferably not greater than 130 parts by mass. When the amount of the silica is within the above range, sufficient low heat generation property, favorable dispersion to the rubber, and favorable processability tend to be achieved.

In the case where silica is contained, a silane coupling agent is preferably used. Examples of the silane coupling agent include bis(3-triethoxysilylpropyl)tetrasulfide, bis(3-triethoxysilylpropyl)trisulfide, bis(3-triethoxysilylpropyl)disulfide, bis(2-triethoxysilylethyl)tetrasulfide, bis(3 -trimethoxysilylpropyl)tetrasulfide, bis(2-trimethoxysilylethyl)tetrasulfide, 3 -mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropyl benzothiazolyl tetrasulfide, 3-triethoxysilylpropyl benzothiazolyl tetrasulfide, 3-triethoxysilylpropyl methacrylate monosulfide, 3-trimethoxysilylpropyl methacrylate monosulfide, bis(3-diethoxymethylsilylpropyl)tetrasulfide,3-mercaptopropyldimethoxymethylsilane, dimethoxymethylsilylpropyl-N,N-dimethylthiocarbamoyl tetrasulfide, and dimethoxymethylsilylpropylbenzothiazole tetrasulfide. These silane coupling agents may be used individually, or two or more of these silane coupling agents may be used in combination.

Silane Coupling Agent

In the case where a silane coupling agent is contained, the amount of the silane coupling agent per 100 parts by mass of the silica is preferably not less than 1 part by mass and more preferably not less than 3 parts by mass. In addition, the amount of the silane coupling agent per 100 parts by mass of the silica is preferably not greater than 20 parts by mass and more preferably not greater than 10 parts by mass. When the amount of the silane coupling agent is within the above range, favorable processability, rubber strength, and abrasion resistance tend to be able to be ensured.

Oil

Examples of oil include process oils such as paraffinic process oils, aromatic process oils, and naphthenic process oils.

In the case where oil is contained, the amount of the oil per 100 parts by mass of the rubber component is preferably not less than 2 parts by mass and more preferably not less than 5 parts by mass. In addition, the amount of the oil per 100 parts by mass of the rubber component is preferably not greater than 40 parts by mass and more preferably not greater than 20 parts by mass. When the amount of the oil is within the above range, an effect due to the presence of the oil is sufficiently achieved, and favorable abrasion resistance can be achieved. In the present specification, the amount of the oil includes the amount of oil contained in oil-extended rubber.

Tackifying Resin

Examples of a tackifying resin include resins that are commonly used in conventional tire rubber compositions, such as aromatic petroleum resins. Examples of aromatic petroleum resins include phenolic resins, coumarone-indene resins, terpene resins, styrene resins, acrylic resins, rosin resins, and dicyclopentadiene resins (DCPD resins). Examples of phenolic resins include Koresin (manufactured by BASF) and Tackirol (manufactured by Taoka Chemical Co., Ltd.). Examples of coumarone-indene resins include Kumaron (manufactured by NITTO CHEMICAL CO., LTD.), Escuron (manufactured by NIPPON STEEL & SUMIKIN CHEMICAL CO., LTD) and Neopolymer (manufactured by JXTG Nippon Oil & Energy Corporation). An example of styrene resins is Sylvatraxx 4401 (manufactured by Arizona Chemical Company). Examples of terpene resins include TR7125 (manufactured by Arizona Chemical Company) and TO125 (manufactured by Yasuhara Chemical Co., Ltd.).

The softening point of the tackifying resin is preferably not lower than 40°C and more preferably not lower than 60°C. By setting the softening point to be not lower than 40°C, sufficient grip performance tends to be achieved. In addition, the softening point is preferably not higher than 120°C and more preferably not higher than 100°C. By setting the softening point to be not higher than 120°C, sufficient grip performance tends to be achieved. The softening point of the resin in the present invention is a softening point that is measured with a ring and ball softening point measuring device according to JIS K 6220-1: 2001 and that is a temperature at which a ball has descended.

The amount of the tackifying resin per 100 parts by mass of the rubber component is preferably not less than 3 parts by mass and more preferably not less than 5 parts by mass. In addition, the amount of the tackifying resin is preferably not greater than 30 parts by mass and more preferably not greater than 25 parts by mass. When the amount of the tackifying resin is within the above range, sufficient grip performance and abrasion resistance are achieved, and favorable low fuel consumption performance tends to be achieved.

Liquid Diene-Based Polymer

Examples of a liquid diene-based polymer include liquid styrene-butadiene copolymers (liquid SBR), liquid butadiene polymers (liquid BR), liquid isoprene polymers (liquid IS), and liquid styrene isoprene copolymers (liquid SIR). Among them, liquid SBR is preferable for the reason that desired abrasion resistance and stable steering stability during running are achieved in a balanced manner. The liquid diene-based polymer in the present specification is a diene-based polymer in liquid form at normal temperature (25°C).

From the standpoint of abrasion resistance, fracture properties, and durability, the weight average molecular weight (Mw) of the liquid diene-based polymer, which is measured by gel permeation chromatography (GPC) and obtained by polystyrene conversion, is preferably not less than $1.0 \times 10^3$ and more preferably not less than $3.0 \times 10^3$. In addition, from the standpoint of productivity, the Mw of the liquid diene-based polymer is preferably not greater than $2.0 \times 10^5$ and more preferably not greater than $1.5 \times 10^4$. The Mw of the liquid diene-based polymer in the present specification is a value that is measured by gel permeation chromatography (GPC) and obtained by polystyrene conversion.

In the case where a liquid diene-based polymer is contained, the amount of the liquid diene-based polymer per 100 parts by mass of the rubber component is preferably not less than 5 parts by mass and more preferably not less than 10 parts by mass. In addition, the amount of the liquid diene-based polymer is preferably not greater than 120 parts by mass and more preferably not greater than 60 parts by mass. When the amount of the liquid diene-based polymer is within the above range, the advantageous effects of the present invention tend to be easily achieved.

Softener

The amount of the softener (the total amount of the adhesive resin, the oil, and the liquid diene-based polymer) per 100 parts by mass of the rubber component is preferably not less than 10 parts by mass and more preferably not less than 20 parts by mass. In addition, the amount of the softener is preferably not greater than 190 parts by mass and more preferably not greater than 105 parts by mass. When the amount of the softener is within the above range, the advantageous effects of the present invention are more suitably achieved.

Antioxidant

Examples of antioxidants include, but not particularly limited to: naphthylamine-based antioxidants such as phenyl-α-naphthylamine, phenyl-β-naphthylamine, and aldol-α-trimethyl-1,2-naphthylamine; quinoline-based antioxidants such as a 2,2,4-trimethyl-1,2-dihydroquinoline copolymer and 6-ethoxy-2,2,4-trimethyl-1,2-dihydroquinoline; diphenylamine-based antioxidants such as p-isopropoxydiphenylamine, p-(p-toluenesulfonylamide)-diphenylamine, N,N-diphenylethylenediamine, and octylated diphenylamine; p-phenylenediamine-based antioxidants such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, N,N'-bis(1-methylheptyl)-p-phenylenediamine, N,N'-bis(1,4-dimethylpentyl)-p-phenylenediamine, N,N'-bis(1-ethyl-3-methylpentyl)-p-phenylenediamine, N-4-methyl-2-pentyl-N'-phenyl-p-phenylenediamine, N,N'-diaryl-p-phenylenediamine, hindered diaryl-p-phenylenediamine, phenylhexyl-p-phenylenediamine, and phenyloctyl-p-phenylenediamine; hydroquinone derivatives such as 2,5-di-(tert-amyl)hydroquinone and 2,5-di-tert-butylhydroquinone; phenol-based antioxidants (monophenol-based antioxidants such as 2,6-di-tert-butyl-4-methylphenol, 2,6-di-tert-butyl-4-ethylphenol, 2,6-di-tert-butylphenol, 1-oxy-3-methyl-4-isopropylbenzene, butylhydroxyanisole, 2,4-dimethyl-6-tert-butylphenol, n-octadecyl-3-(4'-hydroxy-3',5'-di-tert-butylphenyl)propionate, and styrenated phenol; bisphenol-based antioxidants such as 2,2'-methylene-bis-(4-methyl-6-tert-butylphenol), 2,2'-methylene-bis-(4-ethyl-6-tert-butylphenol), 4,4'-butylidene-bis-(3-methyl-6-tert-butylphenol), and 1,1'-bis-(4-hydroxyphenyl)-cyclohexane; trisphenol-based antioxidants; polyphenol-based antioxidants such as tetrakis-[methylene-3-(3',5'-di-tert-butyl-4'-hydroxyphenyl)propionate]methane); thiobisphenol-based antioxidants such as 4,4'-thiobis-(6-tert-butyl-3-methylphenol) and 2,2'-thiobis-(6-tert-butyl-4-methylphenol); benzimidazole-based antioxidants such as 2-mercaptomethylbenzimidazole; thiourea-based antioxidants such as tributyl thiourea; phosphorous acid-based antioxidants such as tris(nonylphenyl)phosphite; and organic thio acid-based antioxidants such as dilauryl thiodipropionate. These antioxidants may be used individually, or two or more of these antioxidants may be used in combination. Among them, from the standpoint of achievement of both desired heat resistance and desired fatigue resistance, N-(1,3-dimethylbutyl)-N'-phenyl-p-phenylenediamine and a 2,2,4-trimethyl-1,2-dihydroquinoline polymer are preferably used in combination.

In the case where an antioxidant is contained, the amount of the antioxidant (in the case where two or more antioxidants are contained, the total amount of these antioxidants) per 100 parts by mass of the rubber component is preferably not less than 1 part by mass and more preferably not less than 1.5 parts by mass. By setting the amount of the antioxidant to be not less than 1 part by mass, durability tends to improve. In addition, the amount of the antioxidant per 100 parts by mass of the rubber component is preferably not greater than 10 parts by mass and more preferably not greater than 5 parts by mass. By setting the amount of the antioxidant to be not greater than 10 parts by mass, browning and the like tend to be prevented.

In addition, regarding stearic acid, zinc oxide, and wax, ones that are conventionally used in the rubber industry can be used.

Method for Producing Rubber Composition for Heavy-Duty Tire Tread

The method for producing the rubber composition for a heavy-duty tire tread according to the present invention is characterized by kneading the organic crosslinking agent represented by the above formula (1) in a base kneading step as described above. That is, the method is not particularly limited as long as the organic crosslinking agent represented by the above formula (1) is kneaded into the rubber component before the sulfur and the vulcanization accelerator are kneaded into the rubber composition. Specifically, in the production method according to the present invention, in a first step of kneading the rubber component and the carbon black, the organic crosslinking agent represented by the above formula (1) is kneaded together, and then a second step of kneading the sulfur and the vulcanization accelerator into the obtained kneaded product is performed. In each kneading step, a known kneading machine can be used, and examples thereof include devices that apply mechanical shearing force to materials and knead and mix the materials, such as a Banbury mixer, a kneader, and an open roll.

First Step

In the first step, the organic crosslinking agent represented by the above formula (1) may be added at the same time as the rubber component and the carbon black, or may be added later than the time at which the rubber component and the carbon black are added. When the organic crosslinking agent is added later than the time at which the rubber component and the carbon black are added, the rubber component and the carbon black are kneaded to increase the temperature of the rubber component, and then the organic crosslinking agent can be efficiently caused to react with the rubber component, since the temperature thereof has been sufficiently increased. Even with a blending formula having a limited sulfur amount, crosslinks can be uniformly and sufficiently formed. Thus, it is possible to reduce the amount of the sulfur contained, and it is considered that with a blending formula in which 75% by mass or greater of a natural rubber is used in 100% by mass of the rubber component, deterioration after the crosslinking can be inhibited. Accordingly, it is more preferable to add the organic crosslinking agent later than the time at which the rubber component and the carbon black are added. Regarding the timing at which the organic crosslinking agent is added later, the organic crosslinking agent is added preferably after 0.5 minutes and more preferably after 1.0 minute from start of kneading the rubber component and the carbon black. By adding the organic crosslinking agent after 0.5 minutes from start of kneading the rubber component and the carbon black, a crosslinking reaction tends to be sufficiently carried out. In addition, regarding the timing at which the organic crosslinking agent is added later, the organic crosslinking agent is added preferably within 3.0 minutes, more preferably within 2.0 minutes, and further preferably within 1.5 minutes from start of kneading the rubber component and the carbon black. By adding the organic crosslinking agent within 3.0 minutes from start of kneading the rubber component and the carbon black, a sufficient reaction time tends to be able to be ensured.

The discharge temperature in kneading in the first step is not particularly limited, but is preferably not lower than 130°C, more preferably not lower than 140°C, and further preferably not lower than 150°C. By setting the discharge temperature in kneading to be not lower than 130°C, a sufficient reaction time tends to be able to be ensured. In addition, the discharge temperature in kneading in the first step is not particularly limited, but is preferably not higher than 180°C, more preferably not higher than 170°C, and further preferably not higher than 160°C. By setting the discharge temperature in kneading to be not higher than 180°C, gelling tends to be able to be prevented.

The total kneading time in the first step is not particularly limited, but is preferably not shorter than 1 minute, more preferably not shorter than 2 minutes, and further preferably not shorter than 3 minutes. By setting the total kneading time to be not shorter than 1 minute, a sufficient reaction time tends to be able to be ensured. In addition, the total kneading time in the first step is not particularly limited, but is preferably not longer than 6 minutes, more preferably not longer than 5 minutes, and further preferably not longer than 4 minutes. By setting the total kneading time to be not longer than 6 minutes, gelling tends to be able to be prevented.

In the case of adding the organic crosslinking agent represented by the above formula (1) later in the first step, the temperature of the kneaded product at the time of addition of the organic crosslinking agent is preferably not lower than 50°C, more preferably not lower than 60°C, and further preferably not lower than 70°C. By setting the temperature of the kneaded product at the time of addition of the organic crosslinking agent to be not lower than 50°C, the rubber is soft, and the carbon black tends to be easily taken into the rubber. In addition, the temperature of the kneaded product at the time of addition of the organic crosslinking agent is not particularly limited, but is preferably not higher than 120°C, more preferably not higher than 110°C, and further preferably not higher than 100°C. By setting the temperature of the kneaded product at the time of addition of the organic crosslinking agent to be not higher than 110°C, a sufficient reaction time tends to be able to be ensured. Here, the temperature of the kneaded product means the temperature in the kneading machine.

In one embodiment of the present invention, the first step is preferably performed such that the rubber component and the carbon black are kneaded for 0.5 to 3 minutes, then the organic crosslinking agent represented by the above formula (1) is added, the mixture is further kneaded for 2 to 3 minutes, and the discharge temperature is set at 150 to 160°C. In this case, the temperature of the kneaded product at the time of addition of the organic crosslinking agent is preferably 50 to 120°C.

Second Step

The second step is a step of cooling the kneaded product obtained in the first step, adding the sulfur and the vulcanization accelerator, and kneading the mixture with an open roll or the like to obtain an unvulcanized rubber composition. Each of the sulfur and the vulcanization accelerator is preferably kneaded in their total amount in the second step.

Preferably, the kneaded product obtained in the first step is cooled normally to 50°C or lower and preferably to 20 to 30°C.

The discharge temperature in kneading in the second step is not particularly limited, but is preferably not lower than 70°C, more preferably not lower than 80°C, and further preferably not lower than 90°C. By setting the discharge temperature in kneading to be not lower than 70°C, a further sufficient reaction time tends to be able to be ensured. In addition, the discharge temperature in kneading in the second step is not particularly limited, but is preferably not higher than 120°C, more preferably not higher than 110°C, and further preferably not higher than 100°C. By setting the discharge temperature in kneading to be not higher than 120°C, burning tends to be able to be prevented.

The kneading time in the second step is not particularly limited, but is preferably not shorter than 0.3 minutes, more preferably not shorter than 0.5 minutes, and further preferably not shorter than 1.0 minute. By setting the kneading time to be not shorter than 0.3 minutes, dispersion of the added chemicals tends to be favorable. In addition, the kneading time in the second step is not particularly limited, but is preferably not longer than 10 minutes, more preferably not longer than 5 minutes, and further preferably not longer than 3 minutes. By setting the kneading time to be not longer than 10 minutes, burning tends to be able to be prevented.

Vulcanization Step

A vulcanized rubber composition can be obtained by vulcanizing the unvulcanized rubber composition obtained in the second step, by a known method. The vulcanization temperature for the unvulcanized rubber composition is not particularly limited, but is preferably not lower than 130°C, more preferably not lower than 135°C, and further preferably not lower than 140°C. By setting the vulcanization temperature to be not lower than 130°C, the time tends to be shortened. In addition, the vulcanization temperature is not particularly limited, but is preferably not higher than 190°C, more preferably not higher than 180°C, and further preferably not higher than 170°C. By setting the vulcanization temperature to be not higher than 190°C, low fuel consumption performance tends to improve.

One embodiment of the present invention is a method for producing a rubber composition for a heavy-duty tire tread, the rubber composition containing a rubber component, carbon black, an organic crosslinking agent represented by formula (1) below, sulfur, and a vulcanization accelerator, wherein an amount of a natural rubber in 100% by mass of the rubber component is not less than 80% by mass, an amount of the carbon black per 100 parts by mass of the rubber component is 50 to 90 parts by mass, an amount of the sulfur per 100 parts by mass of the rubber component is 0.2 to 0.6 parts by mass, and the method includes: a first step of kneading the rubber component, the carbon black, and the organic crosslinking agent; and a second step of kneading the kneaded product obtained in the first step, the sulfur, and the vulcanization accelerator.

$$R^1\text{-}(S)_n\text{-}A\text{-}(S)_m\text{-}R^2 \qquad (1)$$

(wherein A represents an alkylene group having 4 to 8 carbon atoms, $R^1$ and $R^2$ each contain at least one aromatic ring and contain a binding group represented by N-C(=S)- in which a carbon atom is bound to a $-(S)_n-$ or $-(S)_m-$ group, and n and m each independently represent an integer of 2 to 4.)

One embodiment of the present invention is a method for producing a rubber composition for a heavy-duty tire tread, the rubber composition containing a rubber component, carbon black, an organic crosslinking agent represented by formula (1) below, sulfur, and a vulcanization accelerator, wherein an amount of a natural rubber in 100% by mass of the rubber component is not less than 80% by mass, an amount of the carbon black per 100 parts by mass of the rubber component is 50 to 70 parts by mass, an amount of the sulfur per 100 parts by mass of the rubber component is 0.3 to 0.5 parts by mass, and the method includes: a first step of kneading the rubber component, the carbon black, and the organic crosslinking agent; and a second step of kneading the kneaded product obtained in the first step, the sulfur, and the vulcanization accelerator.

$$R^1-(S)_n-A-(S)_m-R^2 \qquad (1)$$

(wherein A represents an alkylene group having 4 to 8 carbon atoms, $R^1$ and $R^2$ each contain at least one aromatic ring and contain a binding group represented by N-C(=S)- in which a carbon atom is bound to a $-(S)_n-$ or $-(S)_m-$ group, and n and m each represent 2.)

One embodiment of the present invention is a method for producing a rubber composition for a heavy-duty tire tread, the rubber composition containing a rubber component, carbon black, an organic crosslinking agent that is 1,6-bis(N,N'-dibenzylthiocarbamoyldithio)hexane, sulfur, and a vulcanization accelerator, wherein an amount of a natural rubber in 100% by mass of the rubber component is not less than 80% by mass, an amount of the carbon black per 100 parts by mass of the rubber component is 50 parts by mass, an amount of the sulfur per 100 parts by mass of the rubber component is 0.5 parts by mass, and the method includes: a first step of kneading the rubber component, the carbon black, and the organic crosslinking agent; and a second step of kneading the kneaded product obtained in the first step, the sulfur, and the vulcanization accelerator.

One embodiment of the present invention is a method for producing a rubber composition for a heavy-duty tire tread, the rubber composition containing a rubber component, carbon black, an organic crosslinking agent that is 1,6-bis(N,N'-dibenzylthiocarbamoyldithio)hexane, sulfur, and a vulcanization accelerator, wherein an amount of a natural rubber in 100% by mass of the rubber component is not less than 80% by mass, an amount of the carbon black per 100 parts by mass of the rubber component is 50 parts by mass, an amount of the sulfur per 100 parts by mass of the rubber component is 0.3 parts by mass, the method includes: a first step of kneading the rubber component, the carbon black, and the organic crosslinking agent; and a second step of kneading the kneaded product obtained in the first step, the sulfur, and the vulcanization accelerator, and the organic crosslinking agent is added after 0.5 to 3 minutes from start of kneading the rubber component and the carbon black in the first step.

Rubber Composition for Heavy-Duty Tire Tread

The rubber composition for a heavy-duty tire tread according to the present invention has excellent abrasion resistance, and thus is used for treads of heavy-duty tires such as truck tires and bus tires, and is particularly preferably used for a cap tread in the case where a tread is composed of two layers, that is, a base tread and the cap tread.

Heavy-Duty Tire

A heavy-duty tire can be produced by a normal method using the rubber composition for a heavy-duty tire tread according to the present invention. Specifically, the heavy-duty tire can be produced by: a forming step of extruding the rubber composition for a heavy-duty tire tread according to the present invention in an unvulcanized state so as to correspond to the shape of the tread of the tire, attaching the extruded rubber composition together with other tire members on a tire forming machine, and shaping these members by a normal method to form an unvulcanized tire (green tire); and heating and pressurizing the unvulcanized tire (green tire) in a vulcanizing machine.

EXAMPLES

The present invention will be described by means of examples below, but the present invention is not limited to these examples.

Various chemicals used in Production Example 1 (production of a modified natural rubber) are collectively described below.
Natural rubber latex: a field latex acquired from Taitex. Co., Ltd.
Surfactant: Emal-E-27C (polyoxyethylene lauryl ether sulfate sodium, active ingredient: 27% by mass) manufactured by Kao Corporation

NaOH: sodium hydroxide manufactured by Wako Pure Chemical Industries, Ltd. Formic acid: formic acid manufactured by Kanto Chemical Co., Inc.

Antioxidant 1: Wingstay L (a compound obtained by butylating a condensate of p-cresol and dichloropentadiene) manufactured by ELIOKEM

Antioxidant 2: Emulvin W (aromatic polyglycol ether) manufactured by LANXESS

Antioxidant 3: Tamol NN9104 (sodium salt of naphthalene sulfonic acid/formaldehyde) manufactured by BASF

Antioxidant 4: Van gel B (hydrated magnesium aluminum silicate) manufactured by Vanderbilt

Cationic polymer flocculant: a polymethacrylic acid ester-based flocculant

(Preparation of Antioxidant Dispersion)

An antioxidant dispersion was prepared by mixing 12.5 g of Emulvin W, 12.5 g of Tamol NN9104, 12.5 g of Van gel B, and 500 g of Wingstay L into 462.5 g of water (1000 g in total) using a ball mill for 16 hours.

Production Example 1: Production of Modified Natural Rubber

The dry rubber content (DRC) of the field latex was adjusted to 30% (w/v), then 25 g of a 10% Emal-E-27C aqueous solution and 60 g of a 25% NaOH aqueous solution were added to 1000 g of the latex, and the mixture was subjected to a saponification reaction at room temperature for 24 hours to obtain a saponified natural rubber latex. Next, 6 g of the antioxidant dispersion was added to the saponified natural rubber latex, the mixture was agitated for 2 hours, and then water was further added to dilute the mixture such that the rubber concentration was 15% (w/v). Next, formic acid was added to the mixture with slow agitation to adjust the pH to 4.0, then the cationic polymer flocculant was added, and the mixture was agitated for 2 minutes, thereby causing aggregation. The diameter of the aggregate (rubber) thus obtained was about 0.5 to 5 mm. The obtained aggregate was taken out and immersed in 1000 ml of a 2 mass% calcium carbonate aqueous solution at normal temperature for 4 hours, and then the rubber was taken out. An operation of adding 2000 ml of water to the rubber, agitating the mixture for 2 minutes, and removing water as much as possible was repeated seven times. Thereafter, 500 ml of water was added to the rubber, 2% by mass of formic acid was added to the mixture until the pH reached 3, and the mixture was allowed to stand for 15 minutes. Furthermore, an operation of removing as much water as possible, adding water again, and agitating the mixture for 2 minutes was repeated three times. Then, water was squeezed off from the resultant rubber with a water squeezing roll to form the rubber into a sheet, and the sheet was dried at 90°C for 4 hours to obtain a solid rubber (modified natural rubber 1).

Production Example 2: Production of Modified Natural Rubber

The dry rubber content (DRC) of the natural rubber latex was adjusted to 15% (w/v), and then formic acid was added to the natural rubber latex with slow agitation to adjust the pH to 4.0 to 4.5, thereby causing aggregation. The aggregated rubber was pulverized, repeatedly washed with 1000 ml of water six times, and then dried at 110°C for 120 minutes to obtain a solid rubber (modified natural rubber 2).

The modified natural rubbers 1 and 2 obtained by Production Examples 1 and 2 were measured for nitrogen content and phosphorus content by methods described below. The results are shown in Table 1. In Table 1, the results of analysis of TSR are shown together for comparison.

(Measurement of Phosphorus Content)

The phosphorus content was obtained by using an ICP emission analyzer (ICPS-8100, manufactured by Shimadzu Corporation). In addition, an NMR analyzer (400MHz, AV400M, manufactured by Bruker Japan K.K.) was used for $^{31}$P-NMR measurement of phosphorus, a measurement peak of a phosphorus atom of an 80% phosphoric acid aqueous solution was set as a reference point (0 ppm), and a component extracted from raw rubber was refined with chloroform, dissolved in $CDCl_3$, and subjected to the measurement.

(Measurement of Nitrogen Content)

The nitrogen content was measured by using CHN CORDER MT-5 (manufactured by Anatec Yanaco Corporation). For the measurement, first, a calibration curve for obtaining a nitrogen content was created using antipyrine as a standard material. Next, about 10 mg of TSR or the modified natural rubber obtained in Production Example 1 was weighed as a sample, and an average value was obtained from the results of three measurements and used as the nitrogen content of the sample.

(Measurement of Gel Content)

70.00 mg of raw rubber cut into 1 mm × 1 mm pieces was weighed as a sample, 35 mL of toluene was added thereto, and the mixture was allowed to stand in a cool and dark place for 1 week. Next, the mixture was subjected to centrifugal separation to precipitate the gel component that was insoluble in toluene, soluble components in the supernatant were removed, only the gel component was solidified with methanol and then dried, and the mass of the dried gel component was measured. A gel content (% by mass) was obtained by the following equation.

$$\text{Gel content (\% by mass)} = [\text{mass (mg) after drying} / \text{initial sample mass (mg)}] \times 100$$

[Table 1]

| | Modified natural rubber | | TSR |
|---|---|---|---|
| | Production Example 1 | Production Example 2 | |
| Phosphorus content (ppm) | 94 | 430 | 572 |
| Nitrogen content (% by mass) | 0.07 | 0.36 | 0.33 |
| Gel content (% by mass) | 8 | 23.1 | 26.9 |

As shown in Table 1, in each modified natural rubber, the phosphorus content and/or the nitrogen content was reduced as compared to those of TSR. In addition, in the $^{31}$P-NMR measurement, for each modified natural rubber, no peak by phospholipid was present at -3 ppm to 1 ppm.

Various chemicals used in examples and comparative examples are collectively described below.
NR: TSR20

Modified NR1: the modified natural rubber of Production Example 1
Modified NR2: the modified natural rubber of Production Example 2

BR: BR360B (cis-1,4-content: 97%) manufactured by Ube Industries, Ltd.

Carbon black 1: DIABLACK I N220 ($N_2SA$: 114 $m^2$/g, average primary particle diameter: 22 nm) manufactured by Mitsubishi Chemical Corporation
Carbon black 2: carbon black having a $N_2SA$ of 168 $m^2$/g, a DBP absorption amount of 133 $cm^3$/100 g, CTAB/IA of 0.89, and an average primary particle diameter of 18 nm

Wax: OZOACE 355 manufactured by NIPPON SEIRO CO., LTD.

Antioxidant 1: ANTIGENE 6C (N-(1,3-dimethylbutyl)-N'-phenyl-p-phenylenediamine) manufactured by Sumitomo Chemical Co., Ltd.
Antioxidant 2: Nocrac 224 (2,2,4-trimethyl-1,2-dihydroquinoline polymer) manufactured by Ouchi Shinko Chemical Industrial Co., Ltd.

Zinc oxide: two types of zinc oxide manufactured by Mitsui Mining & Smelting Co., Ltd.
Stearic acid: bead stearic acid, Tsubaki, manufactured by NOF Corporation
Organic crosslinking agent: Vulcuren VP KA9188 (1,6-bis(N,N'-dibenzylthiocarbamoyldithio)hexane) manufactured by LANXESS
Sulfur: oil sulfur HK200-5 (containing 5% oil) manufactured by Hosoi Chemical Industry Co., Ltd.
Vulcanization accelerator: Nocceler NS (N-tert-butyl-2-benzothiazolyl sulfenamide) manufactured by Ouchi Shinko Chemical Industrial Co., Ltd.

Examples 1 to 7 and 12 and Comparative Examples 1 to 5

According to the blending contents in Table 2, various chemicals in Step 1 in Table 2 were kneaded with a Banbury mixer for 4 minutes under a discharge condition of 150°C to obtain a kneaded product. The obtained kneaded product was cooled to 40°C or lower. Then, according to the blending contents in Table 2, various chemicals in Step 2 in Table 2 were added to the kneaded product, and the mixture was kneaded with a Banbury mixer for 2 minutes under a discharge condition of 95°C to obtain an unvulcanized rubber composition. The obtained unvulcanized rubber composition was press-vulcanized at 150°C for 35 minutes to obtain a vulcanized rubber composition.

Test tires (tire size: 275/80R 22.5) were produced by shaping the obtained unvulcanized rubber composition into the shape of a tread, attaching the shaped unvulcanized rubber composition together with other tire members to form an unvulcanized tire, and vulcanizing the unvulcanized tire at 150°C for 35 minutes.

Examples 8 to 11

Unvulcanized rubber compositions, vulcanized rubber compositions, and test tires were produced in the same manner as Example 1 according to the blending contents in Table 2, except that the organic crosslinking agent was added at times (minute) shown in Table 2 after start of kneading in Step 1, and the temperature of the kneaded product at the time of addition of the organic crosslinking agent was the temperature in Table 2.

The vulcanized rubber compositions and the test tires obtained in the respective examples and comparative examples were evaluated as described below. The results are shown in Table 2.

<Low Heat Generation Property Index>

A rectangular rubber test piece was cut out from a sheet-shaped vulcanized rubber composition and subjected to a test. The loss tangent (tanδ) of the vulcanized rubber sheet was measured at a dynamic strain amplitude of 2.5%, a frequency of 10 Hz, and a temperature of 70°C using a spectrometer manufactured by Ueshima Seisakusho Co., Ltd. A value of the inverse of tanδ is shown as an index with the value of Comparative Example 1 being 100 (low heat generation property index). A higher value indicates that the rolling resistance is lower (heat is more unlikely to be generated and the energy loss is lower) and the rolling resistance (low fuel consumption performance) of the tire is better.

$$\text{(Low heat generation property index)} = \text{(tan}\delta\text{ of Comparative Example 1)} / \text{(tan}\delta \text{ of each blending formula)} \times 100$$

<Abrasion Resistance>

The test tires were mounted to a 2-D vehicle made in Japan. After the vehicle was caused to run for a distance of 50 to 100 thousand kilometers, the groove depth in the tire tread portion was measured, and a running distance at which the tire groove depth was decreased by 1 mm was calculated. The results are shown as indexes based on the following equation. A higher index indicates that the abrasion resistance is better.

$$\text{(Abrasion resistance index)} = \text{(running distance of each blending formula)} / \text{(running distance of Comparative Example 1)} \times 100$$

[Table 2]

| | | Example | | | | | | | | | | | |
|---|---|---|---|---|---|---|---|---|---|---|---|---|---|
| | | 1 | 2 | 3 | 4 | 5 | 6 | 7 | 8 | 9 | 10 | 11 | 12 |
| Composition (part(s) by mass) | Step 1 | | | | | | | | | | | | |
| | NR | 80 | - | 90 | - | - | 80 | 80 | 80 | - | 90 | 80 | - |
| | Modified NR1 | - | 80 | - | 90 | 100 | - | - | - | 80 | - | - | - |
| | Modified NR2 | - | - | - | - | - | - | - | - | - | - | - | 80 |
| | BR | 20 | 20 | 10 | 10 | - | 20 | 20 | 20 | 20 | 10 | 20 | 20 |
| | Carbon black 1 | 30 | 30 | 30 | 30 | 30 | 50 | 90 | 30 | 30 | 30 | 50 | 30 |
| | Carbon black 2 | 20 | 20 | 20 | 20 | 20 | 20 | 0 | 20 | 20 | 20 | 20 | 20 |
| | Wax | 1.5 | 1.5 | 1.5 | 1.5 | 1.5 | 1.5 | 1.5 | 1.5 | 1.5 | 1.5 | 1.5 | 1.5 |
| | Antioxidant 1 | 2.5 | 2.5 | 2.5 | 2.5 | 2.5 | 2.5 | 2.5 | 2.5 | 2.5 | 2.5 | 2.5 | 2.5 |
| | Antioxidant 2 | 0.5 | 0.5 | 0.5 | 0.5 | 0.5 | 0.5 | 0.5 | 0.5 | 0.5 | 0.5 | 0.5 | 0.5 |
| | Stearic acid | 4 | 4 | 4 | 4 | 4 | 4 | 4 | 4 | 4 | 4 | 4 | 4 |
| | Zinc oxide | 4 | 4 | 4 | 4 | 4 | 4 | 4 | 4 | 4 | 4 | 4 | 4 |
| | Organic crosslinking agent | 1.0 | 1.0 | 1.0 | 1.0 | 1.0 | 1.0 | 1.0 | 1.0 | 1.0 | 1.0 | 1.0 | 1.0 |
| | Organic crosslinking agent adding timing (minute) | Same time | Same time | Same time | Same time | Same time | Same time | Same time | 1 | 1 | 1 | 1 | Same time |
| | Temperature of kneaded product (°C) | - | - | - | - | - | - | - | 100 | 100 | 100 | 100 | - |
| | Step 2 | | | | | | | | | | | | |
| | Sulfur | 0.5 | 0.5 | 0.5 | 0.5 | 0.5 | 0.5 | 0.5 | 0.3 | 0.3 | 0.3 | 0.3 | 0.5 |
| | Organic crosslinking agent | - | - | - | - | - | - | - | - | - | - | - | - |
| | Vulcanization accelerator | 1.5 | 1.5 | 1.5 | 1.5 | 1.5 | 1.5 | 1.5 | 1.5 | 1.5 | 1.5 | 1.5 | 1.5 |
| Evaluation | Low heat generation property index | 100 | 105 | 100 | 108 | 110 | 90 | 80 | 90 | 95 | 95 | 85 | 101 |
| | Abrasion resistance index | 115 | 120 | 118 | 120 | 120 | 120 | 125 | 118 | 120 | 120 | 120 | 116 |

[Table 2] Cont.

| Composition (part(s) by mass) | | Comparative Example 1 | Comparative Example 2 | Comparative Example 3 | Comparative Example 4 | Comparative Example 5 |
|---|---|---|---|---|---|---|
| Step 1 | NR | 80 | 80 | 70 | 80 | 80 |
| | Modified NR1 | - | - | - | - | - |
| | Modified NR2 | - | - | - | - | - |
| | BR | 20 | 20 | 30 | 20 | 20 |
| | Carbon black 1 | 30 | 20 | 30 | 20 | 30 |
| | Carbon black 2 | 20 | 20 | 20 | 20 | 20 |
| | Wax | 1.5 | 1.5 | 1.5 | 1.5 | 1.5 |
| | Antioxidant 1 | 2.5 | 2.5 | 2.5 | 2.5 | 2.5 |
| | Antioxidant 2 | 0.5 | 0.5 | 0.5 | 0.5 | 0.5 |
| | Stearic acid | 4 | 4 | 4 | 4 | 4 |
| | Zinc oxide | 4 | 4 | 4 | 4 | 4 |
| | Organic crosslinking agent | - | - | 1.0 | 1.0 | 1.0 |
| | Organic crosslinking agent adding timing (minute) | - | - | Same time | Same time | Same time |
| | Temperature of kneaded product (°C) | - | - | - | - | - |
| Step 2 | Sulfur | 1.5 | 0.5 | 0.5 | 0.5 | 1.0 |
| | Organic crosslinking agent | - | 1.0 | - | - | - |
| | Vulcanization accelerator | 1.5 | 1.5 | 1.5 | 1.5 | 1.5 |
| Evaluation | Low heat generation property index | 100 | 100 | 90 | 105 | 105 |
| | Abrasion resistance index | 100 | 110 | 105 | 100 | 100 |

From the results in Table 2, it is found that in Examples 1 to 12 in which the amount of the natural rubber, the amount of the carbon black, and the amount of the sulfur were within predetermined ranges and the organic crosslinking agent was kneaded in Step 1, the abrasion resistance was better than that in Comparative Examples 1 to 5. In addition, it is found that the average performance of low heat generation property and abrasion resistance was also improved. Furthermore, it is found that in Examples 8 to 11 in which the organic crosslinking agent was added a certain time after addition of the other blending ingredients in Step 1, since the organic crosslinking agent was added after the NR and the carbon were kneaded and the temperature was increased, crosslinks were uniformly and sufficiently formed, and the sulfur amount was reduced, so that deterioration after the crosslinking of the vulcanized rubber composition was inhibited and the abrasion resistance was excellent.

A method for producing a rubber composition for a heavy-duty tire tread having excellent abrasion resistance is provided. The method for producing the rubber composition for a heavy-duty tire tread is a method for producing a rubber composition for a heavy-duty tire tread, the rubber composition containing a rubber component, carbon black, an organic crosslinking agent represented by formula (1) below, sulfur, and a vulcanization accelerator, wherein an amount of a natural rubber in 100% by mass of the rubber component is not less than 75% by mass, an amount of the carbon black per 100 parts by mass of the rubber component is not less than 50 parts by mass, an amount of the sulfur per 100 parts by mass of the rubber component is 0.1 to 0.7 parts by mass, and the method includes: a first step of kneading the rubber component, the carbon black, and the organic crosslinking agent; and a second step of kneading a kneaded product obtained in the first step, the sulfur, and the vulcanization accelerator,

$$R^1\text{-}(S)_n\text{-}A\text{-}(S)_m\text{-}R^2 \qquad (1)$$

wherein A represents an alkylene group having 2 to 10 carbon atoms, $R^1$ and $R^2$ are the same or different from each other, and each represent a monovalent organic group containing a nitrogen atom, and n and m each independently represent an integer of 2 to 4.

## Claims

1. A method for producing a rubber composition for a heavy-duty tire tread, the rubber composition containing a rubber component, carbon black, an organic crosslinking agent represented by formula (1) below, sulfur, and a vulcanization accelerator, wherein

   an amount of a natural rubber in 100% by mass of the rubber component is not less than 75% by mass,
   an amount of the carbon black per 100 parts by mass of the rubber component is not less than 50 parts by mass,
   an amount of the sulfur per 100 parts by mass of the rubber component is 0.1 to 0.7 parts by mass, and
   the method includes:

   a first step of kneading the rubber component, the carbon black, and the organic crosslinking agent; and
   a second step of kneading a kneaded product obtained in the first step, the sulfur, and the vulcanization accelerator,

$$R^1\text{-}(S)_n\text{-}A\text{-}(S)_m\text{-}R^2 \qquad (1)$$

   wherein A represents an alkylene group having 2 to 10 carbon atoms, $R^1$ and $R^2$ are the same or different from each other, and each represent a monovalent organic group containing a nitrogen atom, and n and m each independently represent an integer of 2 to 4.

2. The method for producing the rubber composition for a heavy-duty tire tread according to claim 1, wherein, in the first step, the organic crosslinking agent is added after 0.5 to 3 minutes from start of kneading the rubber component and the carbon black.

3. The method for producing the rubber composition for a heavy-duty tire tread according to claim 1 or 2, wherein the natural rubber contains a modified natural rubber having a phosphorus content of not greater than 500 ppm.

4. The method for producing the rubber composition for a heavy-duty tire tread according to any one of claims 1 to 3, wherein an amount of the organic crosslinking agent per 100 parts by mass of the rubber component is 0.1 to 5 parts by mass.

5. The method for producing the rubber composition for a heavy-duty tire tread according to any one of claims 1 to 4, wherein a discharge temperature in the first step is 130 to 180°C.

6. The method for producing the rubber composition for a heavy-duty tire tread according to any one of claims 1 to 5, wherein a total kneading time in the first step is 1 to 6 minutes.

## Patentansprüche

1. Verfahren zur Herstellung einer Kautschukzusammensetzung für eine hochbelastbare Reifenlauffläche, wobei die Kautschukzusammensetzung einen Kautschukbestandteil, Ruß, ein durch die folgende Formel (1) dargestelltes organisches Vernetzungsmittel, Schwefel, und einen Vulkanisationsbeschleuniger enthält, wobei

   eine Menge eines Naturkautschuks in 100 Massen-% des Kautschukbestandteils nicht weniger als 75 Massen-% ist,
   eine Menge des Ruß pro 100 Massenteile des Kautschukbestandteils nicht weniger als 50 Massenteile ist,
   eine Menge des Schwefels pro 100 Massenteile des Kautschukbestandteils 0,1 bis 0,7 Massenteile ist, und
   das Verfahren beinhaltet:

   einen ersten Schritt des Knetens des Kautschukbestandteils, des Ruß und des organischen Vernetzungsmittels; und

einen zweiten Schritt des Knetens eines gekneteten Produkts, das im ersten Schritt erhalten wird, des Schwefels und des Vulkanisationsbeschleunigers,

$$R^1\text{-}(S)_n\text{-}A\text{-}(S)_m\text{-}R^2 \qquad (1)$$

wobei A eine Alkylengruppe darstellt, die 2 bis 10 Kohlenstoffatome aufweist, $R^1$ und $R^2$ die gleichen oder unterschiedlich voneinander sind, und jedes eine einwertige organische Gruppe darstellt, die ein Stickstoffatom enthält, und n und m jeweils unabhängig eine ganze Zahl von 2 bis 4 darstellt.

2. Verfahren zur Herstellung der Kautschukzusammensetzung für eine hochbelastbare Reifenlauffläche nach Anspruch 1, wobei, im ersten Schritt, das organische Vernetzungsmittel nach 0,5 bis 3 Minuten vom Beginn des Knetens des Kautschukbestandteils und des Ruß zugegeben wird.

3. Verfahren zur Herstellung der Kautschukzusammensetzung für eine hochbelastbare Reifenlauffläche nach Anspruch 1 oder 2, wobei der Naturkautschuk einen modifizierten Naturkautschuk enthält, der einen Phosphorgehalt von nicht größer als 500 ppm aufweist.

4. Verfahren zur Herstellung der Kautschukzusammensetzung für eine hochbelastbare Reifenlauffläche nach einem der Ansprüche 1 bis 3, wobei eine Menge des organischen Vernetzungsmittels pro 100 Massenteile des Kautschukbestandteils 0,1 bis 5 Massenteile ist.

5. Verfahren zur Herstellung der Kautschukzusammensetzung für eine hochbelastbare Reifenlauffläche nach einem der Ansprüche 1 bis 4, wobei eine Austrittstemperatur im ersten Schritt 130 bis 180°C ist.

6. Verfahren zur Herstellung der Kautschukzusammensetzung für eine hochbelastbare Reifenlauffläche nach einem der Ansprüche 1 bis 5, wobei eine Gesamtknetzeit im ersten Schritt 1 bis 6 Minuten ist.

**Revendications**

1. Procédé pour produire une composition de caoutchouc pour une bande de roulement de pneu pour poids lourd, la composition de caoutchouc contenant un composant caoutchouc du noir de carbone, un agent de réticulation organique représenté par la formule (1) ci-dessous, du soufre, et un accélérateur de vulcanisation, dans lequel

la quantité de caoutchouc naturel dans 100 % en masse du composant caoutchouc n'est pas inférieure à 75 % en masse,
la quantité de noir de carbone pour 100 parties en masse du composant caoutchouc n'est pas inférieure à 50 parties en masse,
la quantité de soufre pour 100 parties en masse du composant caoutchouc est de 0,1 à 0,7 partie en masse, et le procédé comprend :

une première étape de malaxage du composant caoutchouc, du noir de carbone, et de l'agent de réticulation organique ; et
une deuxième étape de malaxage du produit malaxé obtenu dans la première étape, du soufre, et de l'accélérateur de vulcanisation,

$$R^1\text{-}(S)_n\text{-}A\text{-}(S)_m\text{-}R^2 \qquad (1)$$

dans laquelle A représente un groupe alkylène ayant 2 à 10 atomes de carbone, $R^1$ et $R^2$ sont identiques ou différents et représentent chacun un groupe organique monovalent contenant un atome d'azote, et n et m représentent chacun un entier de 2 à 4.

2. Procédé pour produire une composition de caoutchouc pour une bande de roulement de pneu pour poids lourd selon la revendication 1, dans lequel, dans la première étape, l'agent de réticulation organique est ajouté 0,5 à 3 minutes après le début du malaxage du composant caoutchouc et du noir de carbone.

3. Procédé pour produire une composition de caoutchouc pour une bande de roulement de pneu pour poids lourd selon la revendication 1 ou 2, dans lequel le caoutchouc naturel contient un caoutchouc naturel modifié ayant une teneur en phosphore non supérieure à 500 ppm.

4. Procédé pour produire une composition de caoutchouc pour une bande de roulement de pneu pour poids lourd selon l'une quelconque des revendications 1 à 3, dans lequel la quantité d'agent de réticulation organique pour 100 parties en masse du composant caoutchouc est de 0,1 à 5 parties en masse.

5. Procédé pour produire une composition de caoutchouc pour une bande de roulement de pneu pour poids lourd selon l'une quelconque des revendications 1 à 4, dans lequel la température de décharge dans la première étape est de 130 à 180°C.

6. Procédé pour produire une composition de caoutchouc pour une bande de roulement de pneu pour poids lourd selon l'une quelconque des revendications 1 à 5, dans lequel le temps de malaxage total dans la première étape est de 1 à 6 minutes.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006045471 A
- WO 2014125700 A
- JP 2010138359 A
- JP 2010174169 A